# EUROPEAN PATENT APPLICATION

(11) **EP 2 637 068 A1**
(43) Date of publication of application: **11.09.2013**
(21) Application number: 12158287.8
(22) Date of filing: 06.03.2012
(51) Int. Cl.: G05B 19/042

(54) **Conveyor safety management system and method thereof**

(71) Applicant: Siemens Aktiengesellschaft, 80333 München (DE)
(72) Inventor: Douglas, Antony Louis Piriyakumar, 560047 Bangalore (IN); Mishra, Anant Kumar, 560050 Bangalore (IN); Venkateswaran, Sornam Vishwanathan, 560084 Bangalore (IN); Agrawal, Abhishek, 560034 Bangalore (IN); Murugaiah, Thirumalai Kumar, 560099 Bangalore (IN)

(57) **Abstract**

The present invention provides a system (100) and a method (400) for safety management in a conveyor system. According to the present invention, a predefined safety zone surrounding the conveyor system is sensed to detect an intrusion therein. A sensing signal (S1, S2... SN) is generated indicating an intrusion. Subsequently, a status signal (S') is generated and communicated over a communication network based on value of the sensing signal (S1, S2... SN). Finally, a shut-down signal is generated and provided to the conveyor system to stop an operation thereof based on the status signal (S').

## Description

The present invention generally relates to conveyor systems. More specifically, the present invention relates to a conveyor safety management system and a method thereof.

Conveyor systems are widely used for transporting articles or materials in various industrial applications related to manufacturing, processing or packaging. Such systems are particularly advantageous in mining, metal manufacturing, baggage handling, pharmaceutical, and auto ancillaries industries.

A typical conveyor system includes a conveyor belt that is rotated around a series of rollers such that articles or materials placed on the conveyor belt are transported from one location to another. At the same time, other implementations, such as those based on movable slats, are also commonly used.

In several cases, the conveyor system represents a cooperative work environment wherein human beings such as plant personnel, operators, and so on, work in close vicinity of high power machines. Evidently, the conveyor systems pose an inherent threat to life safety. Serious injuries and/or loss of life may occur if an operator, plant personnel, or any other life form in close vicinity of the conveyor systems gets inadvertently caught therein. This problem is particularly aggravated in case of the conveyor systems extending over long distances in an open environment.

Accordingly, it is imperative to provide a safety mechanism to prevent inadvertent external interference with the conveyor system. Several such safety arrangements have been proposed in the state of the art. Such safety mechanisms are based on an underlying principle that whence triggered, driving power is prevented from being supplied to the conveyor system.

One solution known in the state of the art is based on installation of pull-ropes on opposite sides of the conveyor belt extending along the length of the conveyor system. Normally-closed lever switches are connected to the pull-rope at regular intervals along the length thereof such that as the pull-rope is pulled, at least one lever switch connected thereto is opened. All lever switches are connected in series to the main drive of the conveyor system. Thus, during an emergency, an operator may pull the pull-rope to cut-off power supply to the main drive of the conveyor system, and thereby bringing the conveyor belt to an immediate halt. After an emergency stop, it becomes necessary to manually inspect entire length of the conveyor system to ascertain the location of an emergency and take appropriate steps to address the same.

This solution may be satisfactory for small-scale conveyor systems with a length of only a few meters. However, in case of large-scale conveyor systems, such as those found in mining, metallurgy, and similar applications, which run up to lengths of a few hundred meters to a few kilometers, such manual inspection leads to inordinate delay in addressing an emergency situation and restarting the conveyor system.

Accordingly, it is desirable to provide a system and a method for conveyor safety management such that location information corresponding to an emergency is readily available such that required action may be taken in a time-efficient manner.

One such system is known from US 5,263,570. The patent provides a light indicator system including a plurality of lights positioned at various locations along the length of a conveyor for expeditiously locating a site of emergency in the conveyor system. Each indicator light is connected to an emergency switch included in the conveyor system. The light indicator system includes an indicator circuit, a resistor, and light means. The indicator circuit is connected to each of said emergency switches, said indicator circuit includes a bridge rectifier which connects said indicator circuit to an emergency switch, and is activated when said emergency switch indicates said emergency situation. The resistor is connected in series with said bridge rectifier. The light means including at least one light emitting diode is connected to the indicator circuit such that the light means is illuminated when said emergency switch indicates said emergency situation.

As will be readily apparent, the above-mentioned patent does not provide an entirely satisfactory solution for the recognized need therein, especially if the conveyor system extends over a few miles, the technique disclosed in the above-mentioned patent would still necessitate that an operator manually inspects the length of the conveyor system to identify the switch that has been activated.

More importantly, the safety mechanism, according to the state-of-the-art, is still dependent on sufficient human action to avert any untoward incidents. During certain circumstances, the required human action may not be feasible, and hence, the desired emergency response is not activated. In addition, the effectiveness of such safety systems is severely compromised in case of any undetected fault or erroneous conditions in the safety mechanism such as wire theft, switch malfunction, short-circuits, and so on.

In light of the foregoing, there is a need for a system and a method for conveyor safety management such that location information corresponding to an emergency is readily available such that required action may be taken and an operation of the conveyor system may be restarted in a time-efficient manner.

Accordingly, an object of the present invention is to provide a conveyor safety management system and a method thereof such that an emergency is handled in a time-effective manner.

The object of the present invention is achieved by a conveyor safety management system and a method thereof according to claims 1 and 13 respectively. Further embodiments of the present invention are addressed in the dependent claims.

In accordance with the foregoing object of the present invention, a conveyor safety management system suitable for use with a conveyor system is provided. The conveyor safety management system includes a plurality of sensor modules, at least one processing module, and at least one control module. Each sensor module is configured for generating a sensing signal indicating an intrusion into a predefined safety zone surrounding the conveyor system. The at least one processing module interfaces the plurality of sensor modules. Each processing module further includes a polling module, a logic module, and a communication module. The polling module iteratively selects each sensor module. The logic module determines an operating mode of the selected sensor module based on value of the sensing signal, and generates a status signal indicating a status of the conveyor system corresponding to the operating mode of the selected sensor module. The communication module provides a communication interface to a communication network. The communication network includes at least two communication channels such that the status signal is communicated over at least one of the communication channels in the communication network. The control module is configured for receiving the status signal over the communication network and providing a shut-down signal to the conveyor system to stop an operation thereof based on the status indicated through the status signal.

The present invention, thus, provides a conveyor safety management system that is capable of ensuring an effective response in case of an emergency. During an emergency, necessary shut-down of the conveyor system is achievable in a time-bound and deterministic manner. Further, the conveyor safety management system of the present invention is capable of handling an emergency situation in a manner which is independent of human action. Further, the conveyor safety management system of the present invention is applicable to any required industrial environment and importantly, can be easily retrofitted in existing conveyor systems without necessitating a replacement of the legacy systems, and hence, ensures a cost-effective approach. Additionally, the present invention facilitates immediate fault localization such that necessary steps may be taken in a time efficient manner at site of an emergency and the conveyor system may be restored to normal operation within least possible time interval, thereby, ensuring minimum system downtime.

In accordance with an embodiment of the present invention, at least one sensor module is one of an optical sensor, an infrared sensor, a radio-frequency sensor, and a switch-state sensor. According to this technical feature, the conveyor safety management system of the present invention is compatible with any suitable sensing technique, as may be required.

In accordance with another embodiment of the present invention, at least one sensor module is coupled to a current loop converter such that the sensing signal output from the sensor module is transmitted over a current loop to the processing module. Thus, the conveyor safety management system of the present invention facilitates easy integration with legacy conveyor systems.

In accordance with another embodiment of the present invention, the polling module is configured to assign a priority level to individual sensor modules or sets thereof, and successively select individual sensor modules at a polling frequency corresponding to a priority level assigned thereto. According to this technical feature, the maximum latency between occurrence of an emergency and detection thereof is configurable and may be set as required. According, response to an emergency situation is initiated in a time-bound manner.

In accordance with another embodiment of the present invention, the status signal indicates one of 'active' status, 'alarm' status, and 'fault' status.

In accordance with another embodiment of the present invention, the status signal comprises location information related to the corresponding sensor module. This technical feature facilitates immediate fault localization such that necessary steps may be taken in a time efficient manner at site of intrusion constituting an emergency and the conveyor system may be restored to normal operating mode within least possible time interval.

In accordance with another embodiment of the present invention, the communication module communicates the status signal over one of a normal communication channel and an emergency communication channel in the communication network based on the status indicated through the status signal. According to this technical feature, a dedicated communication channel is provided for transmitting the alarm status signal. Thus, this technical feature helps to ensure effective response in a time deterministic manner during an emergency.

In accordance with another embodiment of the present invention, the communication module provides an interface to at least one of a Highway Addressable Remote Transducer (HART) network, an Internet Protocol (IP) network, a PROFIBUS network, a PROFINET network, a FieldBus network, a General Packet Radio Service (GPRS) network, an access-point wire network, and an antenna-access point based network. According to this technical feature, the conveyor safety management system of the present invention is compatible with any desired communication network and hence, facilitates data communication over any desired communication network. Also, for fail-safe operation, the conveyor safety management system may be configured to transmit the status signal over two or more communication networks independently implemented.

In accordance with another embodiment of the present invention, the control module is configured to generate the shut-down signal based on the status signal indicating the alarm status. This technical feature ensures that in the event of an alarm status, the conveyor system is shut-down.

In accordance with another embodiment of the present invention, the control module is configured to generate the shut-down signal based on detection of a state of collision and/or congestion on a predefined communication channel in the communication network. This technical feature ensures that in the event of collision or network congestion on the predefined communication channel, the conveyor system is shut-down as a preventive measure.

In accordance with another embodiment of the present invention, the control module comprises a local control module located relatively proximate to the conveyor system and a remote control module located relatively remote from the conveyor system, wherein each of said local control module and said remote control module is configured for providing a shut-down signal to the conveyor system based on the status signal indicating the alarm status. According to this technical feature, the conveyor safety management system of the present invention has two-tier control architecture, such that both an operator working in the vicinity of the conveyor system and an operator working at a remote location are provided with means to control and configure the conveyor system.

In accordance with another embodiment of the present invention, at least one display module is configured to display information related to the operating mode of the plurality of sensors and receiving user inputs. According to this technical feature, a suitable user interface is provided to a user such as to facilitate any required interaction with the conveyor safety management system of the present invention.

The present invention is further described hereinafter with reference to illustrated embodiments shown in the accompanying drawings, in which:
- FIG 1: illustrates a schematic representation of a conveyor safety management system in accordance with an embodiment of the present invention,
- FIG 2: illustrates a schematic representation of a processing module in accordance with an embodiment of the present invention,
- FIG 3: illustrates sets of display modules and control modules associated with two processing modules in accordance with an embodiment of the present invention, and
- FIG 4: illustrates a method for safety management in a conveyor system in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

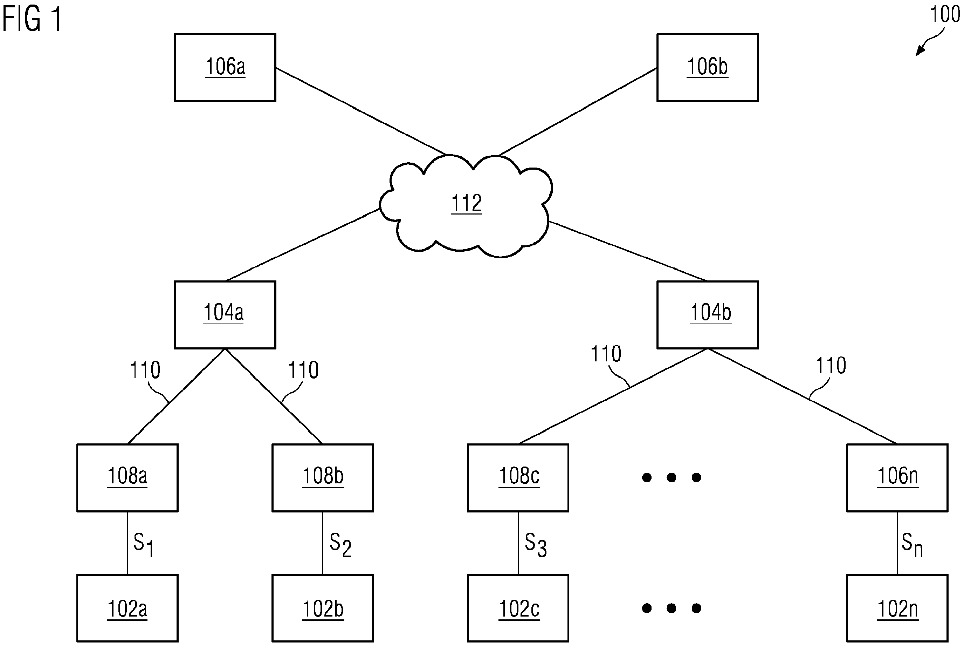

Referring now to FIG 1, a schematic representation of a conveyor safety management system 100 suitable for use with a conveyor system in accordance with an embodiment of the present invention is provided.

The conveyor safety management system 100 includes multiple sensor modules 102, one or more processing modules 104, and one or more control modules 106. Each sensor module 102 is connected to the processing module 104 through a current loop converter 108 and current loop 110. Each processing module 104 is connected to one or more control modules 106 through a communication network 112.

The sensor modules 102 are spatially located around the conveyor system such as to define a safety zone around the conveyor system.

In one example, the conveyor system includes an endless conveyor belt continuously rolling over a series of rollers. In this case, the sensor modules 102 are arranged around the conveyor belt such that an elongated safety zone with rectangular or semi-circular or circular (in case the conveyor belt is installed such as to be substantially elevated from ground level) cross-section and extending along the length of the conveyor belt is formed.

In various exemplary embodiments of the present invention, the sensor modules 102 may be based on any suitable sensing technique, including but not limited to, laser or optical sensing techniques, an infrared sensing technique, a radio-frequency sensing technique, switch-state sensing technique and so on. It should be noted that the plurality of sensor modules 102 may be based on multiple sensing techniques, as mentioned above.

It imperative to mention that implementation of the sensor modules 102 based on switch-state sensing technique represents a specific embodiment of the present invention. In this embodiment, a legacy pull-rope based safety management system is easily upgraded to improve a response to an emergency situation. In particular, the sensor modules 102 sense a state, i.e. an open state or a closed state, and the like, of emergency switches coupled to a pull-rope and in case one or more the emergency switches have been actuated based on a manual action, that is, pulling of the pull-rope, the sensor modules 102 sense the state of the emergency switches and generate an appropriate sensing signal indicating the same.

It should be noted that the sensor modules 102, in accordance with the present invention, may advantageously be formed using 'un-intelligent' sensors, which are devoid of any location information per se. The location information is determined by the processing module 104, as will be explained later.

The sensor modules 102 are configured to detect an intrusion into the safety zone surrounding the conveyor system. Each sensor module 102 generates a sensing signal indicating an intrusion into the safety zone.

Each sensor module 102 operates in one of the following operating modes - 'active', 'alarm', and 'fault' mode. In active mode, the sensor module 102 is functioning normally and no intrusion is detected. In alarm mode, the sensor module 102 is working normally and an intrusion is detected. As will be apparent, an intrusion into the safety zone around the conveyor system may lead to inadvertent interference with the operation of the conveyor system and may potentially lead to an emergency situation leading to loss of man and/or material. Accordingly, the sensor modules 102 are configured such that an intrusion into the safety zone leads to an alarm mode. In fault mode, the sensor module 102 is malfunctioning and a fault condition exists, which may prevent the sensor module 102 from successfully detecting an intrusion into the safety zone.

In accordance with an embodiment of the present invention, each sensor module 102 is coupled to a corresponding current loop converter 108 to provide an analog output in range of 4 mA to 20 mA range over the current loop 110. In an exemplary embodiment of the present invention, a value of 4 mA is considered as live-zero, indicating that the sensor module 102 is functioning normally and there is no intrusion, i.e. the sensor module 102 is operating in the active mode. In the event that value of sensing signal exceeds 4 mA or any other configurable threshold value, it is indicated that an intrusion has been detected i.e. the sensor module 102 is operating in the intrusion mode. On the other hand, the value of sensing signal subceeding (that is, being less than) 4 mA indicates fault condition in sensor module 102, i.e. the sensor module 102 is operating in the fault mode.

In an exemplary embodiment of the present invention, the plurality of sensor modules 102 includes individual sensor modules 102 or sets thereof to sense different operating parameters related to conveyor operation such as belt sway, belt loading, belt sagging, temperatures in various zones, and so on, in addition to intrusion detection.

The present invention will hereinafter be explained in the context of intrusion detection unless otherwise specified. However, various techniques of the present invention, explained in the context of intrusion detection, are equally applicable to sensing modalities applicable to other aspects related to control and monitoring of the conveyor system. In such cases, the sensor modules 102 would operate in the 'alarm' mode when a sensed operating parameter deviates from a normal operating range.

As mentioned earlier, the processing module 104 interfaces the sensor modules 102 through individual current loops 110. The processing module 104 generates a status signal based on value of the sensing signal. With respect to three different operating modes indicated by the sensing signal, namely, active mode, alarm mode, and fault mode, the processing module 104 generates a corresponding status signal indicated a status of the conveyor system. Thus, the status signal indicates one of an active status, an alarm status, and a fault status.

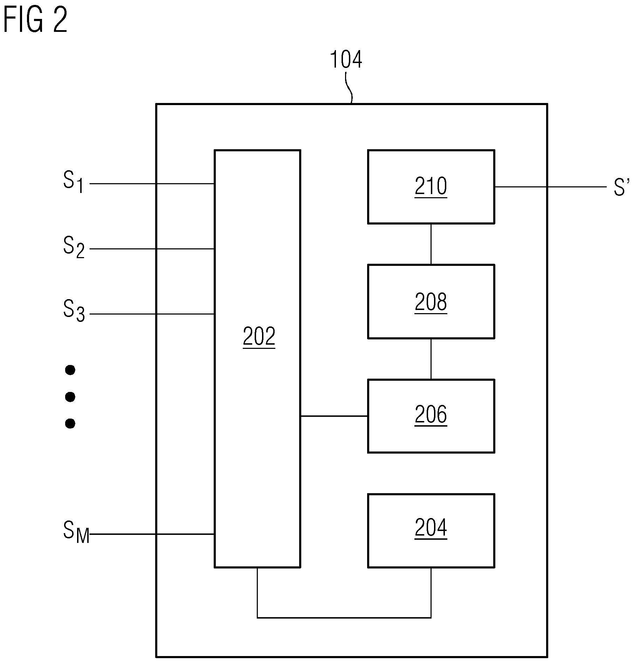

Each status signal includes location information related to the corresponding sensor module 102. The status signal is communicated to the control module 106 over the communication network 112. Various functional modules constituting the processing module 104 are described in detail in conjunction with FIG 2.

In various embodiments of the present invention, the communication network 112 may be based on any desired network protocol, including but not limited to, Highway Addressable Remote Transducer (HART) network protocol, an Internet Protocol (IP) network protocol, a PROFIBUS network protocol, a PROFINET network protocol, a FieldBus network protocol, a General Packet Radio Service (GPRS) network protocol, an access-point wire network protocol, an antenna-access point based network protocol, and so on. In addition, two or more of the above networks may be independently implemented such as to provide redundancy and fault-tolerance.

In accordance with an embodiment of the present invention, the communication network 112 embodies two independent communication channels, namely a normal communication channel and an emergency communication channel, between each processing module 104 and the control module 106. So long as the status signal does not indicate the alarm status, all communication between the processing module 104 and the control module 106 is conducted on the normal communication channel. However, as soon as the status signal indicates the alarm status, the processing module 104 begins to transmit the status signal over the emergency communication channel.

The control module 106 receives the status signal over one of the two communication channels embodied in the communication network 112. In particular, the control module 106 receives various status signals indicating other than the alarm status over the normal communication channel; and further, the control module 106 receives the status signals indicating the alarm status over the emergency communication channel.

In case the status signal indicates the alarm status, the control module 106 provides a shut-down signal to the conveyor system to stop an operation thereof. In addition, the control module 106 also generates suitable audio-visual alarms through suitable user interface (for example, human-machine interface, and so on).

It should be noted that the conveyor system may be configured to respond to the shut-down signal in any suitable manner. In various exemplary embodiments of the present invention, the shut-down signal may result in switching-off power supply to a motor drive of the conveyor system, or activating a braking system of the conveyor system, or de-clutching the motor drive from a transmission drive of the conveyor system, and so on.

On the other hand, in case the status signal indicates a fault status, the control module 106 does not trigger a shut-down. However, the control module 106 raises appropriate audio-visual warnings through a suitable user interface such that an operator becomes aware of the fault condition in the relevant sensor module 102 and takes appropriate action.

Additionally, in the event of an alarm status and an emergency shut-down through action of the control module 106, if appropriate steps to suitably acknowledge and resolve an emergency situation and restart the conveyor system are not taken within a predefined time interval, a second set of audio-visual warnings may be triggered by the control module 106.

In order to provide a fail-safe arrangement, the control module 106 is configured to also generate the shut-down signal based on detection of a state of collision and/or congestion on the emergency communication channel in the communication network 112. Thus, in the event of collision or network congestion, which may prevent the required status signals, indicating the alarm status, from reaching the control module 106 in a comprehensible and timely manner, the conveyor system is shut-down as a preventive measure. It should be noted that the control module 106 is suitably configured to squelch any noise present on the emergency communication channel such that the fail-safe arrangement, as mentioned above, is triggered only when a state of collision/congestion occurs on the emergency communication channel.

FIG 2 illustrates a schematic representation of a processing module 104 in accordance with an embodiment of the present invention.

The processing module 104 includes an analog multiplexer 202, a polling module 204, an analog-to-digital converter 206, a logic module 208, and a communication module 210.

In an exemplary embodiment of the present invention, a set of sensor modules 102, through the current loop converter 108 and the current loop 110 (as described in FIG 1), provide sensing signals S1, S2, through SM. Each sensor module 102 is coupled to an analog multiplexer 202. Thus, total number of sensor modules 102 that may be coupled to a given processing module 104 is based on number of available channels on the analog multiplexer 202.

Although it is possible to increase the number of sensor modules 102 coupled to a processing module 104 using an analog multiplexer with higher number of available channels, it may adversely affect the latency between occurrence of an emergency and detection thereof. Hence, a suitable analog multiplexer 202 is selected based on a defined maximum latency that may exist. Thus, one or more processing modules 104 are installed in the system based on maximum allowable latency.

The polling module 204 successively selects one of the sensing signals (S1 through SM) received from each sensor module 102 such that the corresponding sensing signal (S1 through SM) is retrieved using analog multiplexer 202 and provided to analog-to-digital converter 206.

In accordance with an embodiment of the present invention, the polling module 204 is configurable to set differential priority for individual sensor modules 102 or sets thereof. Thus, in case individual sensor modules 102 or sets thereof sense different operating parameters related to conveyor operation such as belt sway, belt sagging, belt load, temperatures in various zones, and so on, in addition to intrusion detection, the polling module 204 sets the highest priority for polling the sensing signals received from sensor modules 102 corresponding to intrusion detection.

In accordance with a priority level assigned to individual sensor modules 102 or sets thereof, the polling module 204 polls the corresponding sensing signals at different polling intervals such that individual sensor module 102 or sets thereof with a higher priority are polled at a greater polling frequency.

The analog-to-digital converter 206 converts the sensing signal from analog to digital format and provides the sensing signal to the logic module 208.

As explained in detail in conjunction with FIG 1, the logic module 208 determines an operating mode of the selected sensor module 102. Thus, the logic module 208 determines one of the following operating modes of the sensor module 102 - 'active', 'alarm' and 'fault' modes. The logic module 208 generates an appropriate status signal S' based on the operating mode of the sensor modules 102, as described earlier.

As mentioned earlier, the status signal S' includes location information corresponding to the sensor module 102. In one example of the present invention, the sensor modules 102 are 'un-intelligent', that is to say that such sensor modules 102 do not provide any location information per se. In this case, the location information includes an identity of the processing module 104 and an identity of a port of the analog multiplexer 202, such that the corresponding sensor module 102 is readily localizable.

In accordance with an embodiment of the present invention, the logic module 208 generates the status signal based on value of the sensing signal persistently exceeding or subceeding a predefined value for predefined time interval. Therefore, false alarms are prevented.

In case of active status, the logic module 208 is configured to provide the status signal to the control module 106 over the normal communication channel in the communication network 112 to indicate normal operation without any fault in the sensor module 102 and without any intrusion.

Similarly, in case of fault status, the logic module 208 is configured to provide the status signal to the control module 106 over the normal communication channel in the communication network 112 to indicate a fault condition existing in a corresponding sensor module 102.

However, in case of the alarm status, the logic module 208 provides the status signals S' to the control module 106 over the emergency communication channel in the communication network 112, as explained in detail in conjunction with FIG 1, such that appropriate steps may be taken.

The communication module 210 provides a communication interface to a communication network 112 such that the status signal S' is communicated over the communication network 112 to the control module 106. The communication module 210 is configured to support a required network protocol based on the network protocol supported by the communication network 112, as described in conjunction with FIG 1.

It should be noted that various modules included in the processing module 104 and the control module 106 may be implemented in a completely federated manner, which is to say that, individual processing modules 104 may be integrated with individual sensor modules 102 to form a completely distributed input-output system. In contrast several different levels of centralization, as will be readily apparent to a person skilled in the art, may be employed to set-up the conveyor safety management system of the present invention. All such variations are intended to be covered within the scope of the present invention.

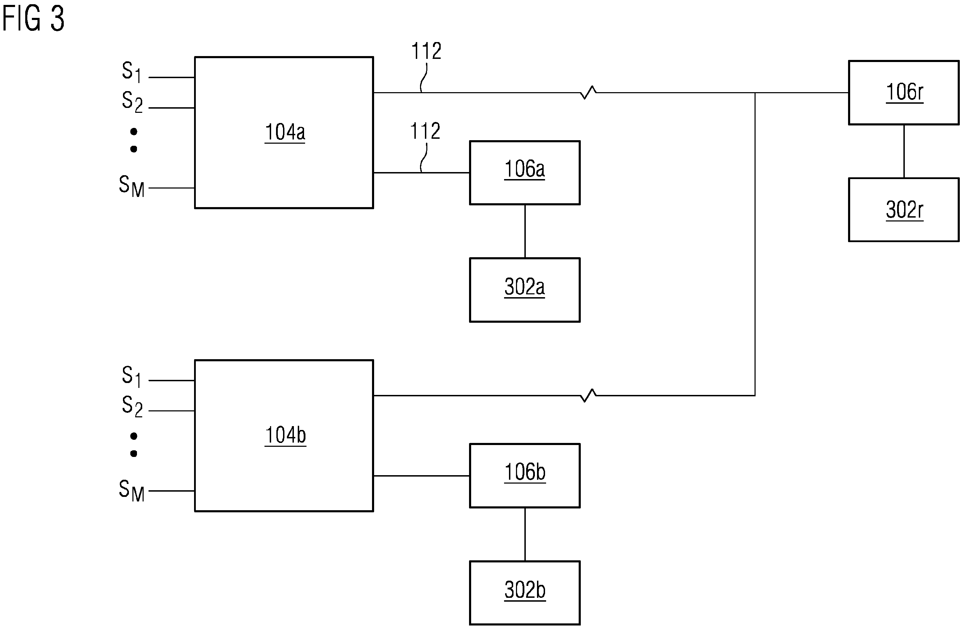

FIG 3 illustrates sets of display modules 302 and sets of control modules 106 associated with processing modules 104a and 104b in accordance with an embodiment of the present invention.

In the embodiment of the present invention shown in the adjoining figure, the processing modules 104a and 104b are connected to respective local control modules 106a and 106b. In addition, each processing module 104 is connected to a remote control module 106r.

The control modules 106a and 106b, shown in the adjoining figure, are local control modules located relatively proximate to the conveyor system. The control module 106r is a remote control module located relatively remote from the conveyor system. Each of said control modules 106a, 106b, and 106r, is configured for providing a shut-down signal to the conveyor system based on the status signal S' indicating the alarm status, as described earlier.

As shown in the adjoining figure, each control module 106a, 106b, and 106r is associated with display modules 302a, 302b, and 302r respectively. Each display module 302 is configured to display information related to the operating mode of the plurality of sensor modules 102 associated with the processor 104. In addition, each display module 302 is configured for receiving user inputs regarding setting up of one or more configuration related parameters for the conveyor safety management system 100. In an exemplary embodiment, the display modules 302a and 302b, associated with the local control modules 106a and 106b, are implemented through a human-machine interface (HMI). Similarly, the display module 302r, associated with the remote control module 106r, is implemented through a suitable industrial computing system.

It should be noted that the relative arrangement of the control modules 106 and the display modules 302 is exemplary in nature and several variations thereof are possible. Hence, the arrangement depicted in the adjoining figure should not be construed to limit the invention in any manner whatsoever.

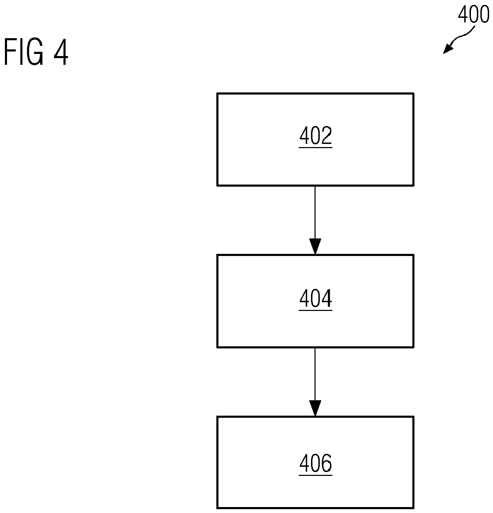

FIG 4 illustrates a method for safety management in a conveyor system, in accordance with an embodiment of the present invention.

At step 402, a sensing signal indicating an intrusion into a predefined zone surrounding the conveyor system is generated. At this step, the sensing is based on any suitable sensing technique, including but not limited to, an optical sensing technique, an infrared sensing technique, a radio-frequency sensing technique, switch-state sensing technique and so on.

At step 404, a status signal indicating a status of the conveyor system is generated based on value of the sensing signal, and subsequently, transmitted over a communication network.

As explained earlier, the sensing signal corresponds to one of the following operating modes - 'active', 'alarm' and 'fault' modes. At step 404, an appropriate status signal based on the value of the sensing signal is generated. Thus, the status signal indicates one of an active status, an alarm status, and a fault status.

It should be noted that the status signal is generated based on value of the sensing signal persistently exceeding or subceeding a predefined value for predefined time interval. Further, the status signal includes location information corresponding to the sensing signal.

In addition, as explained in detail in conjunction with FIGS 1 and 2, the communication network includes two independent communication channels, namely, a normal communication channel and an emergency communication channel. Various status signals, excluding those indicating the alarm status, are transmitted over the normal communication channel. The status signals indicating the alarm status are transmitted over the emergency communication channel in the communication network.

The status signal is communicated over a communication network. As explained in the preceding description, the communication network is based on any suitable network protocol, including but not limited to, Highway Addressable Remote Transducer (HART), an Internet Protocol (IP), a PROFIBUS, a PROFINET, a FieldBus, a General Packet Radio Service (GPRS), an access-point wire based protocol, an antenna-access point based protocol, and so on.

At step 406, in case the status signal indicates the alarm status, a shut-down signal is provided to the conveyor system to stop an operation thereof. In addition, suitable audio-visual alarms through suitable user interface (for example, human-machine interface, and so on) are also generated.

On the other hand, in case the status signal indicates the fault status, a shut-down signal is not provided. However, appropriate audio-visual warnings through a suitable user interface are generated such that an operator becomes aware of the fault condition.

Additionally, in the event of an alarm status and an emergency shut-down, if appropriate steps to suitably acknowledge and resolve an emergency situation and restart the conveyor system are not taken within a predefined time interval, a second set of audio-visual warnings may be triggered.

In order to provide a fail-safe arrangement, the shut-down signal is also generated based on detection of a state of collision and/or congestion on the emergency communication channel in the communication network.

Thus, the present invention provides a conveyor safety management system that provides an effective response to an emergency situation. Hence, during an emergency, a status signal is generated and necessary shut-down of the conveyor system is achievable in a time-bound and deterministic manner. In addition, the present invention facilitates triggering an emergency response without manual intervention during an emergency situation.

The present invention facilitates immediate fault localization such that necessary steps may be taken in a time efficient manner at site of emergency and the conveyor system may be restored to normal operating mode within least possible time interval.

The conveyor safety management system of the present invention is applicable to any required industrial environment and importantly, can be easily retrofitted in existing conveyor systems without necessitating a replacement of the legacy systems, and hence, ensuring a cost-effective approach.

While the present invention has been described in detail with reference to certain embodiments, it should be appreciated that the present invention is not limited to those embodiments. In view of the present disclosure, many modifications and variations would present themselves, to those of skill in the art without departing from the scope and spirit of this invention. The scope of the present invention is, therefore, indicated by the following claims rather than by the foregoing description. All changes, modifications, and variations coming within the meaning and range of equivalency of the claims are to be considered within their scope.

## Claims

1. A conveyor safety management system (100) suitable for use with a conveyor system, the conveyor safety management system (100) comprising:
- a plurality of sensor modules (102), each sensor module (102) configured for generating a sensing signal (S1, S2... SN) indicating an intrusion into a predefined safety zone surrounding the conveyor system,
- at least one processing module (104), the at least one processing module (104) interfacing the plurality of sensor modules (102), each processing module (104) further comprising:
- a polling module (204), the polling module (204) iteratively selecting each sensor module (102),
- a logic module (208), the logic module (208) determining an operating mode of the selected sensor module (102) based on value of the corresponding sensing signal, and generating a status signal (S') indicating a status of the conveyor system corresponding to the operating mode of the selected sensor module (102), and
- a communication module (210), the communication module (210) providing a communication interface to a communication network (112), wherein the communication network (112) comprises at least two communication channels such that the status signal (S') is communicated over at least one of the communication channels in the communication network (112), and
- at least one control module (106), the control module (106) configured for receiving the status signal (S') over the communication network (112) and providing a shut-down signal to the conveyor system to stop an operation thereof based on the status indicated through the status signal (S').

2. The conveyor safety management system (100) according to claim 1, wherein at least one sensor module (102) is one of an optical sensor, an infrared sensor, a radio-frequency sensor, and a switch-state sensor.

3. The conveyor safety management system (100) according to claim 1 or 2, wherein at least one sensor module (102) is coupled to a current loop converter (108) such that the sensing signal (S1, S2... SN) from the sensor module (102) is transmitted over a current loop (110) to the processing module (104).

4. The conveyor safety management system (100) according to any of claims 1 to 3, wherein the polling module (204) is configured to assign a priority level to individual sensor modules (102) or sets thereof, and successively select individual sensor modules (102) at a polling frequency corresponding to a priority level assigned thereto.

5. The conveyor safety management system (100) according to any of claims 1 to 4, wherein the status signal (S') indicates one of an 'active' status, an 'alarm' status, and a 'fault' status.

6. The conveyor safety management system (100) according to any of claims 1 to 5, wherein the status signal (S') comprises location information related to the corresponding sensor module (102).

7. The conveyor safety management system (100) according to any of claims 1 to 6, wherein the communication module (210) communicates the status signal (S') over one of a normal communication channel and an emergency communication channel in the communication network (112) based on the status indicated through the status signal (S').

8. The conveyor safety management system (100) according to any of claims 1 to 7, wherein the communication module (210) provides an interface to at least one of a Highway Addressable Remote Transducer (HART) network, an Internet Protocol (IP) network, a PROFIBUS network, a PROFINET network, a FieldBus network, a General Packet Radio Service (GPRS) network, an access-point wire network, and an antenna-access point based network.

9. The conveyor safety management system (100) according to any of claims 1 to 8, wherein the control module (106) is configured to generate the shut-down signal based on the status signal (S') indicating the alarm status.

10. The conveyor safety management system (100) according to any of claims 1 to 9, wherein the control module (106) is configured to generate the shut-down signal based on detection of a state of collision and/or congestion on a predefined communication channel in the communication network (112).

11. The conveyor safety management system (100) according to any of claims 1 to 10, wherein the control module (106) comprises a local control module (106a) located relatively proximate to the conveyor system and a remote control module (106r) located relatively remote from the conveyor system, and wherein each of said local control module (106a) and said remote control module (106r) is configured for providing a shut-down signal to the conveyor system based on the status signal (S') indicating the alarm status.

12. The conveyor safety management system (100) according to claim 11 further comprising at least one display module (302) associated with at least one of the local control module (106a) and the remote control module (106r) configured to display information related to the operating mode of the plurality of sensors (102) and receiving user inputs.

13. A method (400) for safety management in a conveyor system, the method comprising:
- generating (402) a sensing signal (S1, S2... SN) indicating an intrusion into a predefined safety zone surrounding the conveyor system,
- transmitting (404) a status signal (S') over a communication network, wherein the status signal (S') indicates a status of the conveyor system based on the sensing signal, and
- providing (406) a shut-down signal to the conveyor system to stop an operation thereof based on the status indicated through the status signal (S').

14. The method (400) according to claim 13 further comprising assigning a priority level to individual sensor signals (S1, S2... SN), and successively selecting individual sensing signals (S1, S2... SN) at a polling frequency corresponding to a priority level assigned thereto.

15. The method (400) according to claims 13 or 14, wherein the communication network comprises at least a normal communication channel and an emergency communication channel, the status signal is communicated over at least one of the communication channels in the communication network the status signal (S') based on the status indicated through the status signal (S').
